# EUROPEAN PATENT APPLICATION

(11) **EP 2 270 951 A1**
(43) Date of publication of application: **05.01.2011**
(21) Application number: 09725409.8
(22) Date of filing: 24.03.2009
(51) Int. Cl.: H02J 7/10, H01M 10/44, H02J 7/02

(54) **CHARGING METHOD, CHARGING DEVICE AND BATTERY PACK**

(30) Priority: 25.03.2008 JP 2008077328; 27.03.2008 JP 2008082804
(71) Applicant: Panasonic Corporation, Kadoma-shi Osaka 571-8501 (JP)
(72) Inventor: NAGASHIMA, Takeaki, c/o Panasonic Corporation IPROC, Chuo-ku, Osaka 540-6207 (JP); NAKATAMARI, Yoshiyuki, c/o Panasonic Corporation IPROC, Chuo-ku, Osaka 540-6207 (JP)
(74) Representative: Grünecker, Kinkeldey, Stockmair & Schwanhäusser Anwaltssozietät
(86) International application number: PCT/JP2009/001305
(87) International publication number: WO 2009/119075

(57) **Abstract**

A charging method is a method for charging assembled cells formed by connecting two or more cells in series. Specifically, constant-current charging is performed on the assembled cells, and when the inter-terminal voltage value of one of the cells reaches a first voltage value, the charging current value is reduced from the first current value to a second current value, and constant-current charging in which the charging current value is the second current value is performed on the assembled cells.

## Description

### TECHNICAL FIELD

The present disclosure relates to charging methods, charging devices, and battery packs, and more particularly to a method for charging assembled cells formed by connecting two or more cells in series, a charging device configured to charge assembled cells with the charging method, and a battery pack configured to be charged by the charging device.

### BACKGROUND ART

The market for electronic devices capable of being carried by hand (i.e., portable electronic devices), such as portable audio devices and digital still cameras, has rapidly grown in recent years. With this trend, secondary batteries are used as power sources for driving such portable electronic devices, and thus, play an important role in the market of portable electronic devices.

As a power source for such portable electronic devices, assembled cells formed by connecting two or more secondary batteries in series can be used. Examples of known charging devices for charging assembled cells include charging devices shown in Patent Documents 1 and 2.

In the charging device shown in Patent Document 1, the charging voltage value of the charging device can be made closer to the end voltage set in a secondary battery without an influence of, for example, an error in a reference voltage source in the charging device.

In the charging device shown in Patent Document 2, first, a constant current is supplied between a positive electrode terminal of assembled cells and a negative electrode terminal of the assembled cells (constant-current charging). Then, when a charging current decreases because of transition from the constant-current charging to constant-voltage charging, a charging circuit is connected to each of the cells, and supplies a charging current to the cell to which this charging circuit is connected.
PATENT DOCUMENT 1: Japanese Patent Publication No. H11-98714
PATENT DOCUMENT 2: Japanese Patent Publication No. 2003-134686

### SUMMARY OF THE INVENTION

### TECHNICAL PROBLEM

However, when assembled cells are charged using a conventional charging device to drive an electronic device with the assembled cells, a sufficient driving time of the electronic device cannot be ensured in some cases.

It is therefore an object of the present disclosure to provide a charging method, a charging device, and a battery pack which can ensure a sufficient driving time of an electronic device.

### SOLUTION TO THE PROBLEM

A first charging method according to the present disclosure includes the steps of: (a) performing, on assembled cells, constant-current charging in which a charging current value is a first current value; and (b) when an inter-terminal voltage value of one of the cells reaches a first voltage value, reducing the charging current value from the first current value to a second current value, and performing, on the assembled cells, constant-current charging in which the charging current value is the second current value.

In this charging method, the assembled cells are charged such that each of the inter-terminal voltage values of the cells does not exceed the first voltage value. Accordingly, each of the cells forming the assembled cells can be fully charged. Thus, driving of an electronic device using the assembled cells charged with this charging method can ensure a sufficient driving time of the electronic device.

The first charging method preferably further includes the step of (c) when the inter-terminal voltage value of one of the cells reaches the first voltage value after step (b), reducing the charging current value from the second current value to a third current value, and performing, on the assembled cells, constant-current charging in which the charging current value is the third current value. In this charging method, the charging current decreases stepwise.

In the first charging method, the first voltage value is preferably an overvoltage protection voltage value. In this case, application of an overvoltage to each of the cells forming the assembled cells can be prevented. The "overvoltage protection voltage value" is a voltage value set to prevent an overvoltage from being applied to the cell. In the case where the cells are lithium ion secondary batteries, the charging voltage values of the cells are in the range from 4.1 V to 4.2 V. Thus, the overvoltage protection voltage value can be set in the range from 4.3 V to 4.4 V, for example.

A first charging device according to the present disclosure is a charging device configured to charge assembled cells in a battery pack with the first charging method, and includes a power supply circuit and a charging control unit. The power supply circuit is a circuit configured to supply a charging current to the assembled cells. The charging control unit controls the power supply circuit such that when the charging control unit receives information that an inter-terminal voltage value of one of the cells reaches the first voltage value from the battery pack, the power supply circuit reduces the charging current value.

The first charging device preferably further includes: a positive electrode terminal and a negative electrode terminal each configured to supply the charging current to the assembled cells; and a signal terminal connected to the charging control unit, and configured to receive the information (i.e., information that the inter-terminal voltage value of one of the cells reaches the first voltage value) from the battery pack. The "signal terminal" is a terminal for receiving information that the inter-terminal voltage value of one of the cells reaches the first voltage value from the battery pack.

In this configuration, when the inter-terminal voltage value of one of the cells reaches the first voltage value, this information is transmitted from the battery pack to the signal terminal. When detecting that the signal terminal receives the information, the charging control unit controls the power supply circuit such that the power supply circuit reduces the charging current value.

A battery pack according to the present disclosure is configured to be charged by the first charging device, and includes assembled cells, a voltage monitor, a temperature measurement unit, a first negative electrode terminal, a first temperature terminal, and a switch. The temperature measurement unit measures a temperature of the assembled cells. The first negative electrode terminal is connected to a negative electrode terminal provided in the charging device. The first temperature terminal is connected to a temperature terminal provided in the charging device, and transmits the temperature of the assembled cells to the charging device. The switch is connected to the temperature measurement unit in parallel, and connected to the first negative electrode terminal and the first temperature terminal. The voltage monitor monitors an inter-terminal voltage value of each of the cells, and when detecting that the inter-terminal voltage value of one of the cells reaches the first voltage value, switches the switch from an open state to a closed state. The "temperature terminal" is a terminal for transmitting information on the temperature of the assembled cells or the cell to the charging device.

In this configuration, when the inter-terminal voltage value of one of the cells reaches the first voltage value, information on the temperature of the assembled cells or the cell from the battery pack to the signal terminal of the charging device is not transmitted any more. When detecting reception of the information on the temperature of the cell, the charging control unit in the charging device controls the power supply circuit in the charging device such that the power supply circuit reduces the charging current value.

A second charging method according to the present disclosure includes the steps of: (d) performing constant-current charging on the assembled cells; and (e) when an inter-terminal voltage value of one of the cells reaches a second voltage value, performing, on the cell whose inter-terminal voltage value reaches the second voltage value, constant-voltage charging in which a charging voltage value is the second voltage value, and in step (e), the charging voltage value of one of the cells whose inter-terminal voltage value does not reach the second voltage value increases to the second voltage value.

In this charging method, as in the first charging method, the assembled cells are charged such that the inter-terminal voltage values of the cells do not exceed the second voltage value.

In the second charging method, in step (e), the charging current value to be supplied to the cell whose inter-terminal voltage value reaches the second voltage value is equal to the charging current value to be supplied to the cell whose inter-terminal voltage value does not reach the second voltage value. That is, in the second charging method, the cells are supplied with a charging current not from different power supply circuits but from the common power supply circuit.

In a preferred embodiment described below, the cells are lithium ion secondary batteries, and the second voltage value is 4.2 V.

A second charging device according to the present disclosure is a charging device configured to charge assembled cells in a battery pack with the second charging method, and includes a power supply circuit and a charging control unit. The po wer supply circuit supplies a charging current to the assembled cells. The charging control unit monitors an inter-terminal voltage value of each of the cells, and controls the power supply circuit such that when the inter-terminal voltage value of one of the cells reaches the second voltage value, constant-voltage charging in which a charging voltage value is the second voltage value is performed on the cell whose inter-terminal voltage value reaches the second voltage value.

### ADVANTAGES OF THE INVENTION

According to the present disclosure, a sufficient driving time of an electronic device can be ensured.

### BRIEF DESCRIPTION OF THE DRAWINGS

[FIG. 1] FIG. 1 is a block diagram illustrating a conventional charging system.
[FIG. 2] FIG. 2 shows graphs of changes with time in an inter-terminal voltage of assembled cells, an inter-terminal voltage of a cell, a charging current, and a charging capacity, when the assembled cells are charged using the conventional charging system.
[FIG. 3] FIG. 3 shows graphs for describing problems in the conventional system, and shows changes with time in the inter-terminal voltage of assembled cells, an inter-terminal voltage of a first cell, an inter-terminal voltage of a second cell, and a charging current.
[FIG. 4] FIG. 4 is a block diagram illustrating a charging system according to a first embodiment of the present disclosure.
[FIG. 5] FIG. 5 shows graphs of changes with time in an inter-terminal voltage of assembled cells, an inter-terminal voltage of a first cell, the intensity of a signal from a battery pack to a charging device, a charging current, and a charging capacity, when the assembled cells are charged using the charging system of the first embodiment.
[FIG. 6] FIG. 6 is a flowchart showing a charging method according to the first embodiment.
[FIG. 7] FIG. 7 is a block diagram illustrating a charging system according to a variation of the first embodiment.
[FIG. 8] FIG. 8 shows graphs of changes with time in an inter-terminal voltage of assembled cells, an inter-terminal voltage of a first cell, the intensity of a signal from a battery pack to a charging device, a charging current, and a charging capacity, when the assembled cells are charged using the charging system of the variation of the first embodiment.
[FIG. 9] FIG. 9 is a block diagram illustrating a charging system according to a second embodiment of the present disclosure.
[FIG. 10] FIG. 10 shows graphs of changes with time in an inter-terminal voltage of assembled cells, an inter-terminal voltage of a first cell, an inter-terminal voltage of a second cell, and a charging current, when the assembled cells are charged using the charging system of the second embodiment.
[FIG. 11] FIG. 11 is a flowchart showing a charging method according to the second embodiment.

### DESCRIPTION OF REFERENCE CHARACTERS

- 1: charging device
- 2: power supply circuit
- 3: charging control unit
- 4: reference voltage regulator
- 5: resistor divider
- 6: charging current detector
- 7a: positive electrode terminal
- 7b: negative electrode terminal
- 7c: temperature terminal
- 7d: signal terminal
- 7e: potential terminal
- 8: battery pack
- 9a: positive electrode terminal
- 9b: negative electrode terminal
- 9c: temperature terminal
- 9d: signal terminal
- 9e: potential terminal
- 10: assembled cells
- 10A: first cell
- 10B: second cell
- 12: voltage monitor
- 13: temperature detector
- 14: switch
- 16: charging current
- 31: charging device
- 32: power supply circuit
- 38: battery pack
- 39: protection switch
- 41: voltage calculation unit
- 42: first charging control unit
- 43: second charging control unit

### DESCRIPTION OF EMBODIMENTS

Prior to describing embodiments of the present disclosure, studies of inventors of the present disclosure for completing the present disclosure will be described. The inventors examined a charging method for a lithium ion secondary battery as a specific example of a cell. First, a conventional charging system and a conventional charging method will be described.

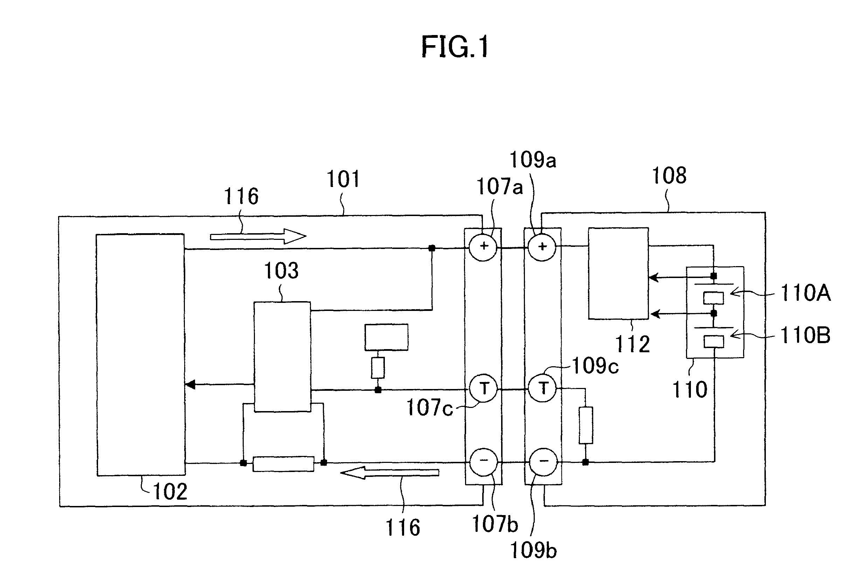

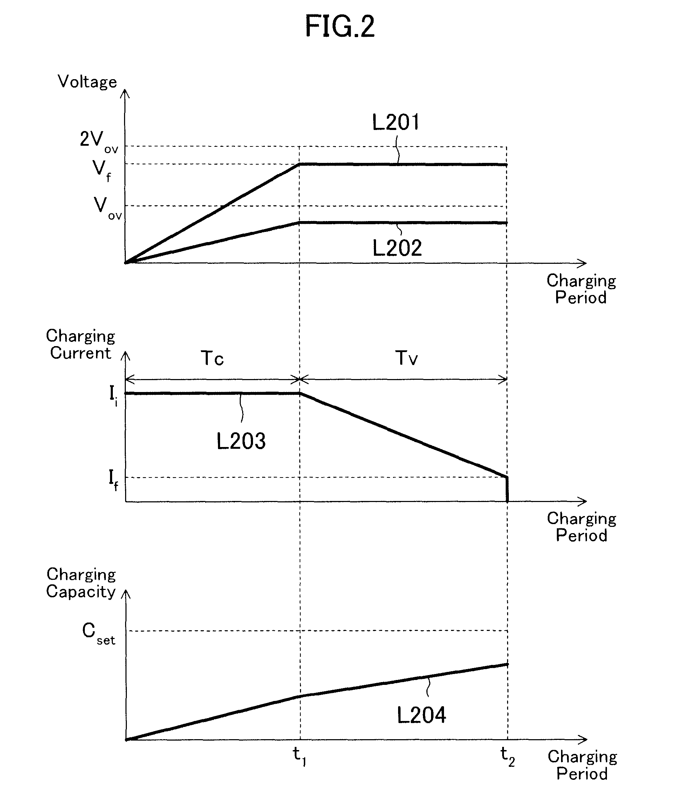

FIG. 1 is a block diagram illustrating a conventional charging system. FIG. 2 shows graphs of a change (indicated by L201 in FIG. 2) with time in an inter-terminal voltage of assembled cells, a change (indicated by L202 in FIG. 2) with time in an inter-terminal voltage of a cell, a change (indicated by L203 in FIG. 2) with time in a charging current, and a change (indicated by L204 in FIG. 2) with time in a charging capacity, when the assembled cells are charged using the charging system illustrated in FIG. 1. In FIG. 2, Tc denotes a period during which constant-current charging is performed, and Tv denotes a period during which constant-voltage charging is performed.

In the conventional charging system, when a positive electrode terminal 107a, a negative electrode terminal 107b, and a temperature terminal 107 of a charging device 101 are electrically connected to a positive electrode terminal 109a, a negative electrode terminal 109b, and a temperature terminal 109c of a battery pack 108, respectively, a charging current 116 (having a current value Iᵢ) is supplied from a power supply circuit 102 in the charging device 101 to assembled cells 110 in the battery pack 108. In this manner, charging of the assembled cells 110 is started.

In an initial stage of charging, constant-current charging in which the charging current value is constant is performed. This constant-current charging causes the inter-terminal voltage value of the assembled cells 110 to increase gradually. When the inter-terminal voltage value of the assembled cells 110 reaches a predetermined value V_{f}(where t = tᵢ), the constant-current charging shifts to constant-voltage charging. This constant-voltage charging causes the charging current value to gradually decrease. When the charging current value decreases to a small current value I_{f} (e.g., 100 mA), charging of the assembled cells 110 is finished.

Although not shown, when the inter-terminal voltage value of a first cell 110A or a second cell 110B reaches an overvoltage protection voltage value Vₒᵥ, a voltage monitor 112 stops charging of the assembled cells 110. In this manner, application of an overvoltage to the first cell 110A and the second cell 110B can be prevented.

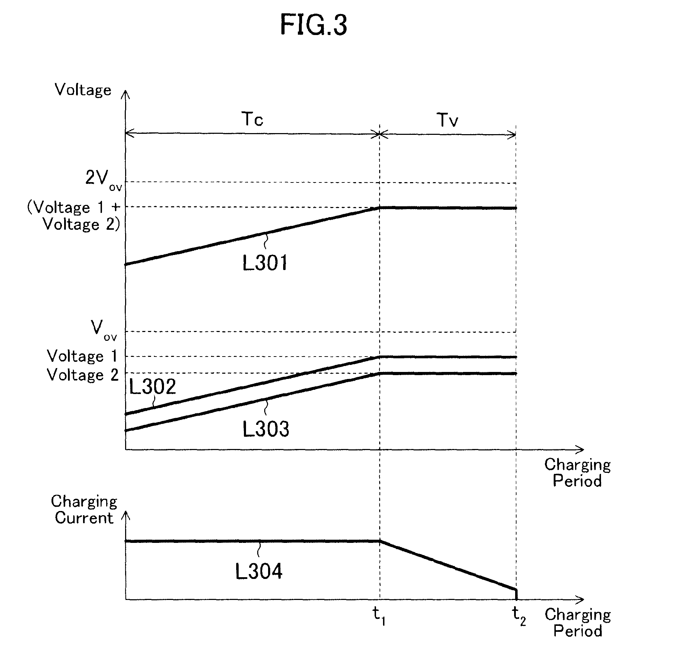

In the manner described above, in the conventional charging method, the assembled cells 110 are charged such that the inter-terminal voltage value of the assembled cells 110 does not exceed the predetermined value V_{f}. When the inter-terminal voltage value of the first cell 110A or the second cell 110B reaches the overvoltage value Vₒᵥ, charging of the assembled cells 110 is stopped. Accordingly, the assembled cells 110 can be charged without degradation of safety of the first cell 110A and the second cell 110B. On the other hand, the inventors of the present disclosure found that the conventional charging method can fail to charge the assembled cells to a degree in which the charging capacity value of the assembled cells reaches a charging capacity value Cₛₑₜ set in design (i.e., the assembled cells cannot be fully charged) in some cases. This problem will now be described with reference to FIG. 3.

FIG. 3 shows graphs of a change (indicated by L301 in FIG. 3) with time in the inter-terminal voltage in the assembled cells, a change (indicated by L302 in FIG. 3) with time in the inter-terminal voltage in the first cell, a change (indicated by L303 in FIG. 3) with time in the inter-terminal voltage in the second cell, and a change (indicated by L304 in FIG. 3) with time in a charging current. In FIG. 3, Tc denotes a period during which constant-current charging is performed, and Tv denotes a period during which constant-voltage charging is performed.

In general, assembled cells are formed by connecting cells fabricated under the same conditions in series. Accordingly, when such assembled cells are charged, charging capacity values of the cells after the charging are expected to be equal to each other. In application, however, even when a plurality of cells are fabricated under the same conditions, these cells show slightly different performances. This difference causes the inter-terminal voltage value of the first cell to be larger than the inter-terminal voltage value of the second cell in constant-current charging, as shown in FIG. 3. In the conventional charging method, even when the inter-terminal voltage value of the first cell differs from the inter-terminal voltage value of the second cell, the constant-current charging shifts to the constant-voltage charging at the time when the sum of the inter-terminal voltage value of the first cell and the inter-terminal voltage value of the second cell reaches a predetermined value. Accordingly, in charged assembled cells, the inter-terminal voltage value ("Voltage 1" in FIG. 3) of the first cell differs from the inter-terminal voltage value ("voltage 2" in FIG. 3) of the second cell in some cases. Since the predetermined value V_{f} is obtained by (the charging voltage value of a cell) × (the number of cells), the second cell cannot be fully charged in some cases when the inter-terminal voltage value of the first cell is larger than the inter-terminal voltage value of the second cell.

When an electronic device is driven using such assembled cells, problems such as overheating of the cells might arise. Thus, it is difficult to ensure safety of assembled cells. In addition, when an electronic device is driven using such assembled cells, the driving time of the electronic device terminates at the time when discharging of a cell having the smallest charging capacity value finishes. To solve such problems, the inventors of the present disclosure presented the following two charging methods.

The first charging method is a method with which inter-terminal voltage values of the respective cells are controlled in a battery pack. Specifically, the same number of control units as the cells are provided in the battery pack. When the inter-terminal voltage value of each of the cells reaches a predetermined value, an associated one of the control units controls a power supply circuit in a charging device such that the power supply circuit reduces the charging current value. In this charging method, assembled cells are charged such that the inter-terminal voltage value of each of the cells does not exceed the predetermined value, and thus, each of the cells can be fully charged. However, with this charging method, the same number of control units as the cells are provided in the battery pack, and thus, the size of the battery pack increases disadvantageously.

In the second charging method, information on whether the inter-terminal voltage value of each of the cells reaches a predetermined value or not is transmitted from the battery pack to the charging device. Specifically, the same number of determination units as the cells are provided in the battery pack. In addition, the battery pack includes transmission terminals for transmitting determination results in the respective determination units to the charging device, and the charging device includes reception terminals connected to the respective transmission terminals. That is, the same number of transmission terminals as the cells are provided in the battery pack, and the same number of reception terminals as the cells are provided in the charging device. When one of the determination units determines that the inter-terminal voltage value of an associated one of the cells reaches a predetermined value, this information is input to the charging device through the transmission terminal connected to this determination unit and the reception terminal connected to this transmission terminal. In response to the input, the power supply circuit in the charging device reduces the charging current value. As in the first charging method, in the second charging method, the assembled cells are charged such that the inter-terminal voltage value of each of the cells does not exceed a predetermined value, and thus, each of the cells can be fully charged. However, in the second charging method, the same number of determination units as the cells forming the assembled cells need to be provided in the battery pack, and the same number of transmission terminals as the cells forming the assembled cells need to be provided in the battery pack. In addition, the same number of reception terminals as the cells forming the assembled cells need to be provided in the battery pack. Accordingly, the sizes of the battery pack and the charging device increase disadvantageously.

The inventors of the present disclosure conducted various studies, to complete a charging method, a charging device, and a battery pack which can fully charge each cell in assembled cells and can reduce the sizes of the battery pack and the charging device. Embodiments of the present disclosure will be described in detail hereinafter with reference to the drawings. It should be noted that the present disclosure is not limited to the following embodiments. In description of the embodiments, like reference characters are used to designate identical or equivalent elements, and explanation thereof may not be repeated.

### «First Embodiment»

In a charging method according to a first embodiment of the present disclosure, constant-current charging using a first current value as a charging current value is performed on assembled cells, and when the inter-terminal voltage value of one of the cells forming the assembled cells reaches the first voltage value, the charging current value is reduced from the first current value to a second current value, and constant-current charging using the second current value as the charging current value is performed on the assembled cells. In the following description, a configuration and operation of a charging system capable of performing this charging method will be described, and then the charging method will be specifically described.

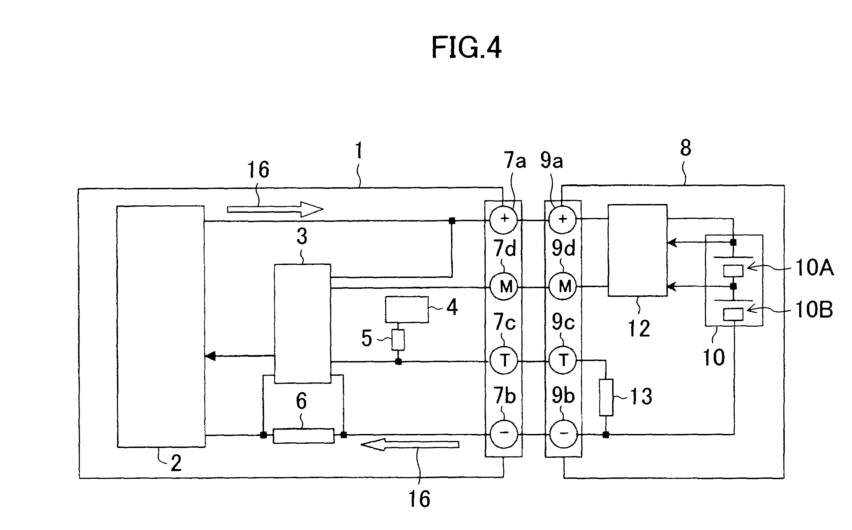

FIG. 4 is a block diagram illustrating a charging system according to this embodiment.

The charging system of this embodiment includes a charging device 1 and a battery pack 8.

The charging device 1 includes a positive electrode terminal 7a, a negative electrode terminal 7b, a temperature terminal 7c, and a signal terminal 7d. The temperature terminal 7c is a terminal for receiving information on the temperature of assembled cells 10 or each cell from the battery pack 8. The signal terminal 7d is a terminal for receiving information that the inter-terminal voltage value of one of a first cell 10A and a second cell 10B reaches the first voltage value from the battery pack 8. The first voltage value is a voltage value larger than a charging voltage of a cell by about 0.5V to about 1 V, and is preferably an overvoltage protection voltage value (e.g., 4.3 V to 4.4 V). The charging device 1 includes a power supply circuit 2, a charging control unit 3, a reference voltage regulator 4, a resistor divider 5, and a charging current detector 6.

The power supply circuit 2 is connected to the positive electrode terminal 7a and the negative electrode terminal 7b, and supplies a charging current 16 to the assembled cells 10 in the battery pack 8. The power supply circuit 2 changes the charging current value according to an output from the charging control unit 3.

The charging control unit 3 controls charging of the assembled cells 10. Specifically, the charging control unit 3 controls the charging voltage value such that the inter-terminal voltage values of the first cell 10A and the second cell 10B forming the assembled cells 10 do not exceed a reference voltage value. The reference voltage value is an output value from the reference voltage regulator 4, and is 4.2 V, for example. The reference voltage regulator 4 is connected to the charging control unit 3 through the resistor divider 5. The charging control unit 3 is connected to the signal terminal 7d. When the signal terminal 7d receives information that the inter-terminal voltage value of the first cell 10A or the second cell 10B reaches the first voltage value from a signal terminal 9d of the battery pack 8, the charging control unit 3 reduces the charging current value. This charging current value is detected by the charging current detector 6.

The battery pack 8 includes a positive electrode terminal 9a, a negative electrode terminal (a first negative electrode terminal) 9b, a temperature terminal (a first temperature terminal) 9c, and the signal terminal 9d. The temperature terminal 9c is a terminal for transmitting information on the temperature of the assembled cells 10 or each cell to the charging device 1. The signal terminal 9d is a terminal for transmitting information that the inter-terminal voltage value of one of the first cell 10A and the second cell 10B reaches the first voltage value to the charging device 1. The battery pack 8 includes the assembled cells 10, a voltage monitor 12, and a temperature detector 13.

In the assembled cells 10, the first cell 10A and the second cell 10B are connected in series. The assembled cells 10 has a positive electrode terminal (i.e., a positive electrode terminal of the first cell 10A) connected to the positive electrode terminal 9a, and a negative electrode terminal (i.e., a negative electrode terminal of the second cell 10B) connected to the negative electrode terminal 9b. The first cell 10A and the second cell 10B are secondary batteries fabricated under the same conditions, and may be, for example, lithium ion secondary batteries.

The voltage monitor 12 monitors the inter-terminal voltage values of the first cell 10A and the second cell 10B, and determines whether or not the inter-terminal voltage value of each of the first cell 10A and the second cell 10B reaches the first voltage value in charging. The voltage monitor 12 is connected to the signal terminal 9d, and when determining that the inter-terminal voltage value of one of the first cell 10A and the second cell 10B reaches the first voltage value in charging, outputs information that the inter-terminal voltage value of one of the first cell 10A and the second cell 10B reaches the first voltage value to the signal terminal 9d.

The temperature detector 13 detects the temperatures of the first cell 10A and the second cell 10B, and is, for example, a thermistor. The temperature detector 13 is connected to the negative electrode terminal 9b and the temperature terminal 9c.

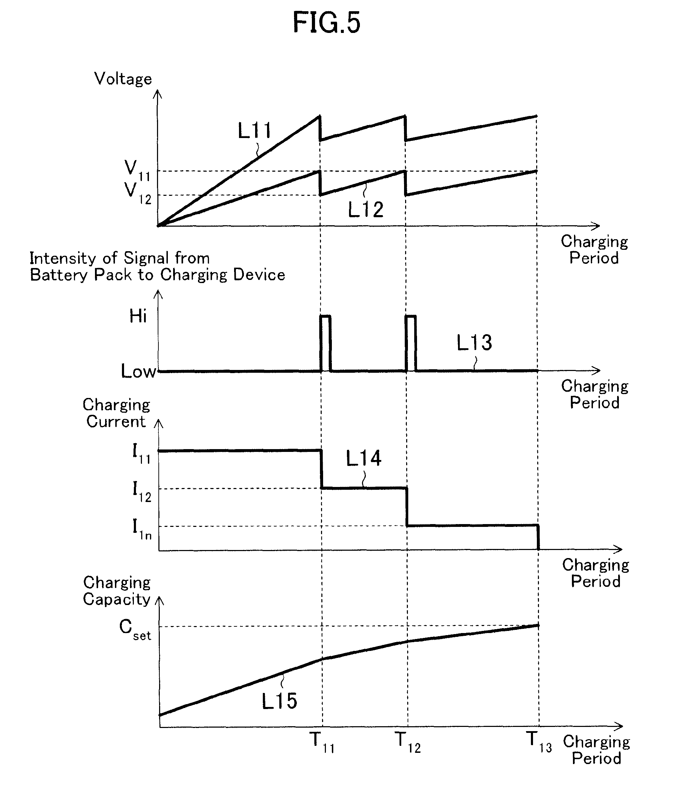

FIG. 5 shows graphs of a change (indicated by L11 in FIG. 5) with time in the inter-terminal voltage of the assembled cells 10, a change (indicated by L12 in FIG. 5) with time in the inter-terminal voltage of the first cell 10A, a change (indicated by L13 in FIG. 5) with time in the intensity of a signal from the battery pack 8 to the charging device 1, a change (indicated by L 14 in FIG. 5) with time in a charging current, and a change (indicated by L15 in FIG. 5) with time in a charging capacity, when the assembled cells 10 are charged using the charging system of this embodiment. In the following description, it is assumed that the inter-terminal voltage value of the first cell 10A is higher than that of the second cell 10B during the constant-current charging.

When the positive electrode terminal 7a, the negative electrode terminal 7b, the temperature terminal 7c, and the signal terminal 7d of the charging device 1 are respectively connected to the positive electrode terminal 9a, the negative electrode terminal 9b, the temperature terminal 9c, and the signal terminal 9d of the battery pack 8, the power supply circuit 2 in the charging device 1 supplies a constant current (I₁₁) to the assembled cells 10 in the battery pack 8. In this manner, constant-current charging in which the charging current value is I₁₁ starts.

As the constant-current charging in which the charging current value is I₁₁ progresses, the inter-terminal voltage value of each of the first cell 10A and the second cell 10B increases. Accordingly, when this constant-current charging starts, the voltage monitor 12 in the battery pack 8 monitors the inter-terminal voltage values of the first cell 10A and the second cell 10B, and determines whether or not the inter-terminal voltage value of each of the first cell 10A and the second cell 10B reaches the first voltage value V₁₁.

When the voltage monitor 12 in the battery pack 8 detects that the inter-terminal voltage value of one of the cells (which is the first cell 10A in this case) reaches the first voltage value V₁₁ (where t = T₁₁), the voltage monitor 12 outputs information that the inter-terminal voltage value of the first cell 10A reaches the first voltage value V₁₁ to the signal terminal 9d of the battery pack 8. In this embodiment, when determining that the inter-terminal voltage value of the first cell 10A reaches the first voltage value V₁₁, the voltage monitor 12 switches the intensity of a signal transmitted from the signal terminal 9d of the battery pack 8 to the signal terminal 7d of the charging device 1 from low to high.

When the charging control unit 3 in the charging device 1 detects the switching of the signal intensity described above, the charging control unit 3 controls the power supply circuit 2 so as to reduce the charging current value from I₁₁ to I₁₂. In this manner, the power supply circuit 2 reduces the charging current value to be supplied to the assembled cells 10 in the battery pack 8 from I₁₁ to I₁₂, and performs constant-current charging. At this time, the charging current value is reduced from I₁₁ to I₁₂ without a change in the internal resistance value of the battery pack 8. Accordingly, when the charging current value is reduced from I₁₁ to I₁₂, the inter-terminal voltage value of each of the first cell 10A and the second cell 10B quickly decreases.

Thereafter, as the constant-current charging in which the charging current value is I₁₂ progresses, the inter-terminal voltage values of the first cell 10A and the second cell 10B increase again, and the inter-terminal voltage value of the first cell 10A reaches the first voltage value V₁₁ again (where t = T₁₂). Then, the above-described control is performed.

Specifically, when the voltage monitor 12 in the battery pack 8 determines that the inter-terminal voltage value of the first cell 10A reaches the first voltage value V₁₁ again (where t = T₁₂), the voltage monitor 12 switches the intensity of a signal to be transmitted from the signal terminal 9d of the battery pack 8 to the signal terminal 7d of the charging device 1 from low to high. The charging control unit 3 in the charging device 1 detects the switching of the signal intensity by the voltage monitor 12, and controls the power supply circuit 2 so as to reduce the charging current value. In this manner, the power supply circuit 2 reduces the charging current value below I₁₂, and performs constant-current charging on the assembled cells 10.

When the charging current value is reduced to be smaller than I₁₂, the inter-terminal voltage values of the first cell 10A and the second cell 10B decrease. However, as the constant-current charging progresses, the inter-terminal voltage values of the first cell 10A and the second cell 10B increase, and then, the inter-terminal voltage value of the first cell 10A reaches the first voltage value V₁₁. Then, the above-described control is performed again. Thereafter, when the voltage monitor 12 in the battery pack 8 detects that the inter-terminal voltage value of the first cell 10A reaches the first voltage value V₁₁ and the charging control unit 3 in the charging device 1 detects that the charging current value is a small current value Iₗₙ (e.g., 100 mA) (where t = T₁₃), the charging control unit 3 controls the power supply circuit 2 so as to stop the supply of the charging current 16. In this manner, the charging is finished.

In sum, in the charging system of this embodiment, when the voltage monitor 12 in the battery pack 8 detects that the inter-terminal voltage value of one of the first cell 10A and the second cell 10B reaches the first voltage value V₁₁ in constant-current charging using I₁₁, the power supply circuit 2 in the charging device 1 reduces the charging current value from **I**₁₁ to I₁₂, and performs constant-current charging on the assembled cells 10. Thereafter, when the voltage monitor 12 detects that the inter-terminal voltage value of one of the first cell 10A and the second cell 10B reaches the first voltage value V₁₁ in the constant-current charging using I₁₂, the power supply circuit 2 reduces the charging current value below I₁₂, and performs constant-current charging on the assembled cells 10. This series of control is performed until the charging current value reaches the small current value Iₗₙ.

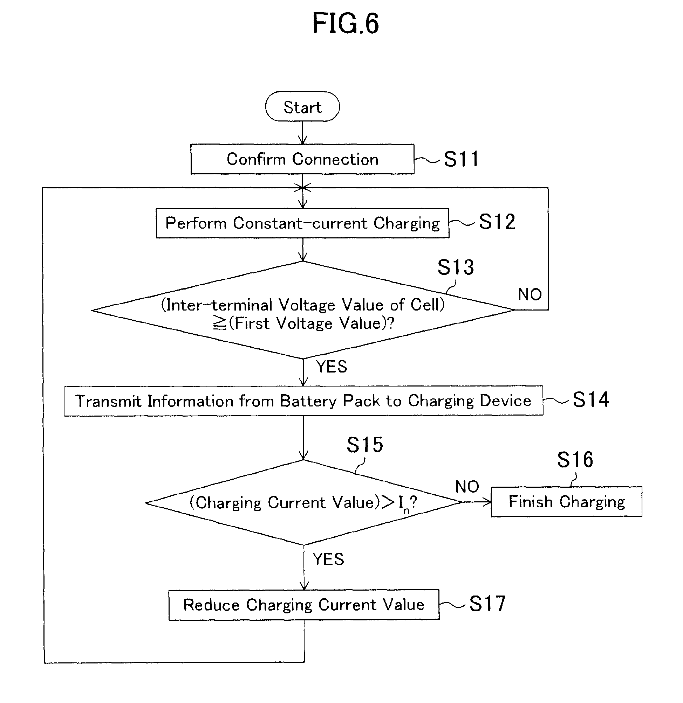

FIG. 6 is a flowchart showing a charging method according to this embodiment.

First, in Step S11, connection is confirmed. Specifically, it is confirmed that the positive electrode terminal 9a, the negative electrode terminal 9b, the temperature terminal 9c, and the signal terminal 9d of the battery pack 8 are respectively connected to the positive electrode terminal 7a, the negative electrode terminal 7b, the temperature terminal 7c, and the signal terminal 7d of the charging device 1. Then, the process proceeds to Step S 12.

In Step S12, constant-current charging is performed on the assembled cells 10 (step (a)). Specifically, the power supply circuit 2 in the charging device 1 supplies a constant charging current (where charging current value = I₁₁) to the assembled cells 10 in the battery pack 8. Thereafter, the process proceeds to Step S 13.

In Step S 13, it is determined whether or not the inter-terminal voltage value of each of the first cell 10A and the second cell 10B reaches the first voltage value V₁₁. This determination is performed by the voltage monitor 12 in the battery pack 8. If the inter-terminal voltage value of each of the first cell 10A and the second cell 10B does not reach the first voltage value V₁₁ (i.e., No), the charging current value is not changed from I₁₁, and the constant-current charging is continued. On the other hand, if the inter-terminal voltage value of one of the first cell 10A and the second cell 10B reaches the first voltage value V₁₁ (i.e., Yes), the process proceeds to Step S 14 (step (b)).

In Step S 14, information that the inter-terminal voltage value of one of the first cell 10A and the second cell 10B reaches the first voltage value V₁₁ is transmitted from the battery pack 8 to the charging device 1. In this embodiment, the voltage monitor 12 in the battery pack 8 switches the intensity of a signal to be transmitted from the signal terminal 9d of the battery pack 8 to the signal terminal 7d of the charging device 1 from low to high. Then, the process proceeds to Step S 15.

In Step S 15, it is determined whether or not the charging current value exceeds a small current value Iₗₙ, (e.g., 100 mA). This determination is performed by the charging control unit 3 in the charging device 1. If the charging current value is smaller than or equal to the small current value Iₗₙ (i.e., No), the process proceeds to Step S16, and charging is finished. On the other hand, if the charging current value exceeds the small current value Iₗₙ (i.e., Yes), the process proceeds to Step S 17.

In Step S 17, the charging current value is reduced (step (b)). Specifically, the charging control unit 3 in the charging device 1 controls the power supply circuit 2 in the charging device 1 to reduce the charging current value from I₁₁ to I₁₂. At this time, the internal resistance of the battery pack 8 does not change, and thus, the inter-terminal voltage values of the first cell 10A and the second cell 10B decrease. Thereafter, the process returns to Step S12, and constant-current charging in which the charging current value is I₁₂ is performed on the assembled cells 10. Then, this control is repeatedly performed until the charging current value reaches the small current value Iₗₙ or less in Step S15.

As described above, in this embodiment, the assembled cells 10 are charged such that the inter-terminal voltage values of the first cell 10A and the second cell 10B do not exceed the first voltage value. The first voltage value is larger than the charging voltage value. Accordingly, the first cell 10A and the second cell 10B can be fully charged. Thus, as shown in FIG. 5, the charging capacity value of the charged assembled cells 10 can be increased to a charging capacity value Cₛₑₜ defined in the design. In this manner, driving of an electronic device using the assembled cells 10 charged with the charging system or the charging method of this embodiment can ensure a sufficient driving time of the electronic device.

In addition, in this embodiment, the first cell 10A and the second cell 10B can be fully charged. Thus, a variation of the charging capacity value between the first cell 10A and the second cell 10B can be reduced. Accordingly, driving of an electronic device using the assembled cells 10 charged with the charging system or the charging method of this embodiment can reduce degradation of the safety of the first cell 10A and the second cell 10B during driving of the electronic device. As a result, the electronic device can be safely used.

Moreover, when the first voltage value is used as the overvoltage protection voltage value, the assembled cells 10 can be charged such that the inter-terminal voltage values of the first cell 10A and the second cell 10B do not exceed the overvoltage protection voltage value. Accordingly, application of an overvoltage to each of the first cell 10A and the second cell 10B can be prevented, thereby reducing degradation of the safety of cells during charging.

Furthermore, in this embodiment, the first cell 10A and the second cell 10B can be fully charged without providing the same number of control units as the cells in the battery pack. In addition, each of the first cell 10A and the second cell 10B can be fully charged without providing the same number of determination units as the cells in the battery pack, providing the same number of signal terminals as the cells in the battery pack, and providing the same number of signal terminals as the cells in the charging device 1. As a result, an increase in the sizes of the battery pack 8 and the charging device 1 can be reduced.

This embodiment may have the following configuration.

The amount of decrease in the charging current value is not specifically limited. When the amount of decrease in the charging current value is excessively large, the amount of decrease in the inter-terminal voltage value of the cell due to the decrease in the charging current value is large. Accordingly, the time necessary for charging after the decrease is disadvantageously long. On the other hand, when the amount of decrease in the charging current value is excessively small, the inter-terminal voltage of the cell quickly reaches the first voltage value, and thus, the number of reductions of the charging current value increases. Accordingly, in this case, the time necessary for the charging is also disadvantageously long. In view of the foregoing facts, the amount of decrease in the charging current value is preferably in the range from 10% to 20%, both inclusive, of charging current at the start of charging, and is 12.5%, for example.

In other words, FIG. 5 shows the case where the charging current value is reduced twice. However, the number of reductions of the charging current value may be three or more.

The number of cells forming the assembled cells is not limited to two. Three of more cells may form the assembled cells as long as one signal terminal is provided in the battery pack and one signal terminal is provided in the charging device.

The method for notifying the charging device that the inter-terminal voltage value of one of the cells forming the assembled cells reaches the first voltage value is not limited to the method of this embodiment, and may be methods which will be described in the following variation.

### (Variation)

In the charging method of the first embodiment, when the inter-terminal voltage value of one of the first cell 10A and the second cell 10B reaches the first voltage value, the intensity of a signal to be transmitted from the signal terminal 9d of the battery pack 8 to the signal terminal 7d of the charging device 1 is switched from low to high. On the other hand, in a charging method according to a variation of the first embodiment, when the inter-terminal voltage value of one of the first cell 10A and the second cell 10B reaches the first voltage value, transmission of a signal from the battery pack to the charging device is temporarily stopped. In the following description, different aspects from the first embodiment will be mainly described.

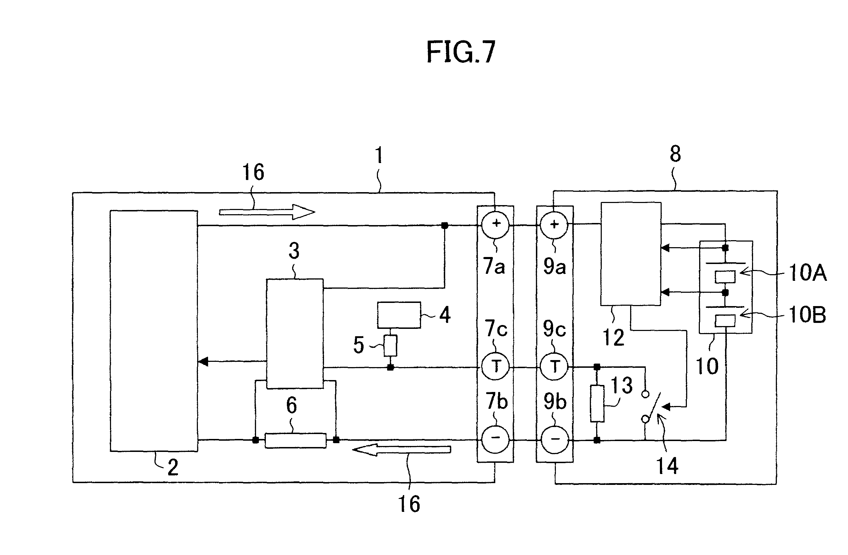

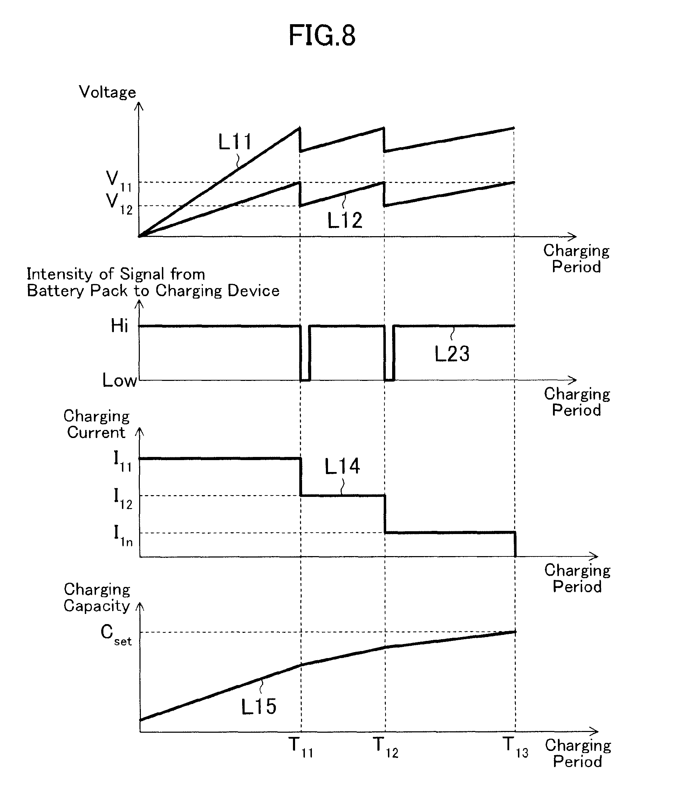

FIG. 7 is a block diagram illustrating a charging system according to this variation. FIG. 8 shows graphs of a change (indicated by L11 in FIG. 8) with time in the assembled cells 10, a change (indicated by L12 in FIG. 8) with time in the inter-terminal voltage of the first cell 10A, a change (indicated by L23 in FIG. 8) with time in the intensity of a signal from the battery pack 8 to the charging device 1, a change (indicated by L14 in FIG. 8) with time in a charging current, and a change (indicated by L15 in FIG. 8) with time in a charging capacity, when the assembled cells 10 are charged using the charging system of this variation.

In the charging system of this variation, none of the charging device 1 and the battery pack 8 includes a signal terminal, and the battery pack 8 includes a switch 14.

The switch 14 is connected to the temperature detector 13 in parallel, and is connected to the negative electrode terminal 9b and the temperature terminal 9c. When determining that the inter-terminal voltage value of one of the first cell 10A and the second cell 10B exceeds the first voltage value, the voltage monitor 12 switches the switch 14 from an open state to a closed state.

When the switch 14 is open, information on the temperature of the assembled cells 10 (or a cell) is transmitted from the battery pack 8 to the charging device 1 through the temperature terminal 9c of the battery pack 8 and the temperature terminal 7c of the charging device 1. When the switch 14 is switched from the open state to the closed state, transmission of the above information from the battery pack 8 to the charging device 1 is stopped. That is, when the switch 14 is switched from the open state to the closed state, the intensity of a signal to be transmitted from the temperature terminal 9c of the battery pack 8 to the temperature terminal 7c of the charging device 1 changes from high to low. When detecting that information on the temperature of the assembled cells 10 (or the cell) is not input to the charging device 1, the charging control unit 3 determines that the inter-terminal voltage value of the first cell 10A or the second cell 10B reaches the first voltage value, and controls the power supply circuit 2 to reduce the charging current value. In this manner, the power supply circuit 2 in the charging device 1 reduces the charging current value.

In the charging method of this variation, when it is determined that the inter-terminal voltage value of one of the first cell 10A and the second cell 10B reaches the first voltage value in Step S 13 of the charging method of the first embodiment, the switch 14 in the battery pack 8 is switched from the open state to the closed state in Step S 14.

As described above, this variation differs from the first embodiment in the specific method for notifying the charging device 1 that the inter-terminal voltage value of one of the first cell 10A and the second cell 10B reaches the first voltage value. Thus, this variation can obtain the same advantages as those in the first embodiment.

### «Second Embodiment»

In a charging method according to a second embodiment of the present disclosure, constant-current charging is performed on assembled cells, and when the inter-terminal voltage value of one of the cells forming the assembled cells reaches a second voltage value, constant-voltage charging is performed only on the cell whose inter-terminal voltage value has reached the second voltage value. In the following description, the configuration and operation of a charging system capable of performing this charging method will be described, and then the charging method will be specifically described.

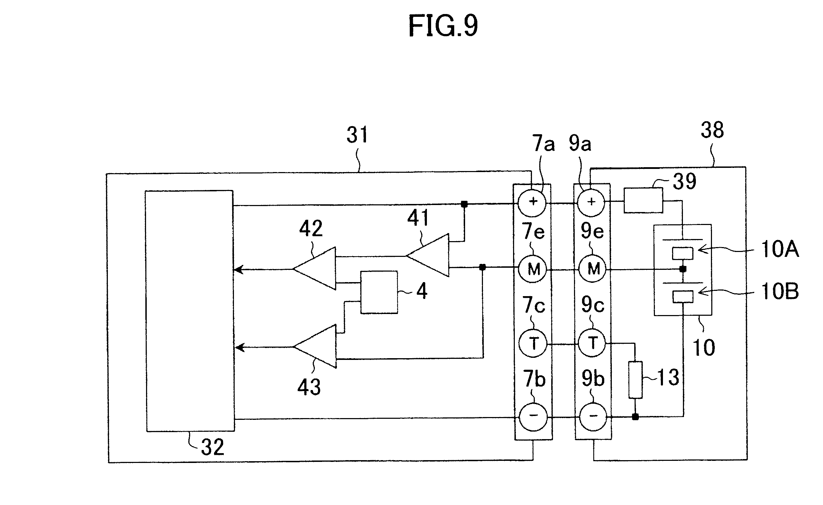

FIG. 9 is a block diagram illustrating a charging system according to this embodiment.

The charging system of this embodiment includes a charging device 31 and a battery pack 38.

The charging device 31 includes a positive electrode terminal 7a, a ne gative electrode terminal 7b, a temperature terminal 7c, and a potential terminal 7e. The temperature terminal 7c is the same as that of the first embodiment. The potential terminal 7e is a terminal for receiving a potential between a first cell 10A and a second cell 10B from the battery pack 38. The charging device 31 includes a power supply circuit 32, a reference voltage regulator 4, a voltage calculation unit 41, a first charging control unit 42, and a second charging control unit 43.

The power supply circuit 32 is connected to the positive electrode terminal 7a and the negative electrode terminal 7b, and supplies a charging current to assembled cells 10 in the battery pack 38. The power supply circuit 32 changes a charging current value according to outputs from the first charging control unit 42 and the second charging control unit 43.

The voltage calculation unit 41 calculates an inter-terminal voltage of the first cell 10A in the battery pack 38. Specifically, the voltage calculation unit 41 receives a potential at the positive electrode terminal of the assembled cells 10 in the battery pack 38 from the positive electrode terminal 7a of the charging device 31, and receives a potential between the first cell 10A and the second cell 10B from the potential terminal 7e of the charging device 31. The voltage calculation unit 41 subtracts an input value (i.e., the potential between the first cell 10A and the second cell 10B) from the potential terminal 7e of the charging device 31 from an output value (i.e., a potential at the positive electrode terminal of the assembled cells 10) from the positive electrode terminal 7a of the charging device 31, thereby calculating the inter-terminal voltage value of the first cell 10A in the battery pack 38.

The first charging control unit 42 controls the charging voltage value of the first cell 10A in the battery pack 38. Specifically, the first charging control unit 42 receives a reference voltage value (e.g., 4.2 V) from the reference voltage regulator 4, and receives the inter-terminal voltage value of the first cell 10A in the battery pack 38 from the voltage calculation unit 41. The first charging control unit 42 determines whether or not the inter-terminal voltage value of the first cell 10A reaches the second voltage value, and outputs the determination result to the power supply circuit 32. The first cell 10A and the second cell 10B are lithium ion secondary batteries, and thus, the second voltage value is preferably 4.2 V.

The second charging control unit 43 controls the charging voltage value of the second cell 10B in the battery pack 38. Specifically, the second charging control unit 43 receives the reference voltage value from the reference voltage regulator 4, and receives the potential between the first cell 10A and the second cell 10B in the battery pack 38 from the potential terminal 7e. The second charging control unit 43 determines whether or not the potential between the first cell 10A and the second cell 10B in the battery pack 38 reaches the second voltage value, and outputs the determination result to the power supply circuit 32. Since the negative electrode terminal 9b of the battery pack 38 is grounded in general, the potential between the first cell 10A and the second cell 10B in the battery pack 38 is the inter-terminal voltage value of the second cell 10B.

The battery pack 38 includes a positive electrode terminal 9a, a negative electrode terminal 9b, a temperature terminal 9c, and a potential terminal 9e. The temperature terminal 9c is the same as that of the first embodiment. The potential terminal 9e is a terminal for transmitting the potential between the first cell 10A and the second cell 10B to the charging device 31. The battery pack 38 includes assembled cells 10, a temperature detector 13, and a protection switch 39.

The assembled cells 10 and the temperature detector 13 are the same as those of the first embodiment.

When the inter-terminal voltage value of each of the first cell 10A and the second cell 10B reaches the overvoltage protection voltage value, the protection switch 39 stops charging of the assembled cells.

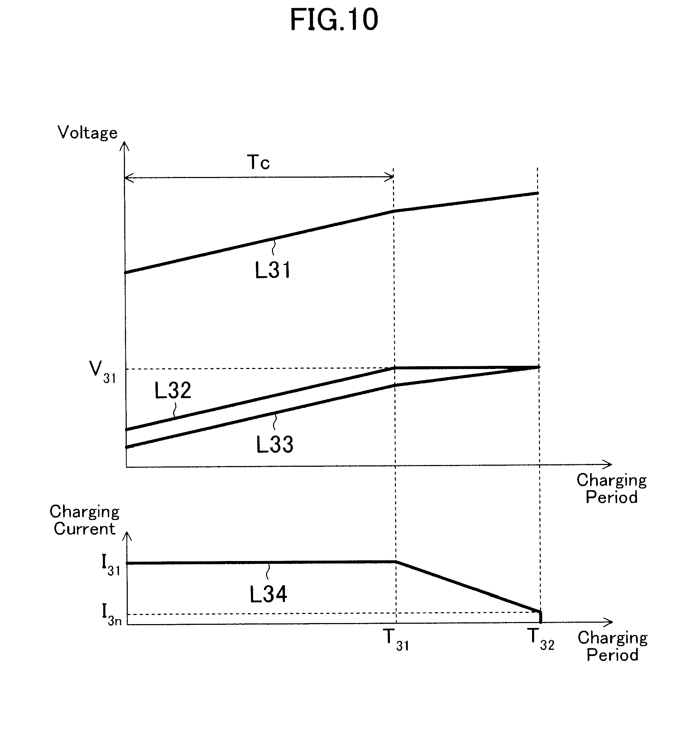

FIG. 10 shows graphs of a change (indicated by 31 in FIG. 10) with time in the inter-terminal voltage of the assembled cells 10, a change (indicated by L32 in FIG. 10) with time in the inter-terminal voltage of the first cell 10A, a change (indicated by L33 in FIG. 10) with time in the inter-terminal voltage of the second cell 10B, and a change (indicated by L34 in FIG. 10) with time in a charging current, when the assembled cells 10 are charged using the charging system of this embodiment. In FIG. 10, Tc denotes a period during which constant-current charging is performed. In the following description, it is assumed that the inter-terminal voltage value of the first cell 10A is larger than that of the second cell 10B in the constant-current charging.

When the positive electrode terminal 7a, the negative electrode terminal 7b, the temperature terminal 7c, and the potential terminal 7e of the charging device 31 are respectively connected to the positive electrode terminal 9a, the negative electrode terminal 9b, the temperature terminal 9c, and the potential terminal 9e of the battery pack 38, the power supply circuit 32 of the charging device 31 supplies a constant current (I₃₁) to the assembled cells 10 in the battery pack 38. In this manner, constant-current charging of the assembled cells 10 is started.

As the constant-current charging progresses, the inter-terminal voltage values of the first cell 10A and the second cell 10B increase. Accordingly, when this constant-current charging is started, the first charging control unit 42 in the charging device 31 determines whether or not the inter-terminal voltage value of the first cell 10A reaches the second voltage value V₃₁. The second charging control unit 43 in the charging device 31 determines whether or not the inter-terminal voltage value of the second cell 10B reaches the second voltage value V₃₁.

More specifically, when the constant-current charging is started, the potential terminal 9e of the battery pack 38 measures the potential between the first cell 10A and the second cell 10B. The measured potential is input to the voltage calculation unit 41 and the second charging control unit 43 in the charging device 31 through the potential terminal 7e of the charging device 31.

The voltage calculation unit 41 subtracts the input potential from the reference voltage value. In this manner, the inter-terminal voltage value of the first cell 10A is calculated, and the calculated inter-terminal voltage value of the first cell 10A is input to the first charging control unit 42. The first charging control unit 42 determines whether or not the input inter-terminal voltage value of the first cell 10A reaches the second voltage value V₃₁.

The second charging control unit 43 determines whether or not the input potential reaches the second voltage value V₃₁.

When the first charging control unit 42 detects that the inter-terminal voltage value of the first cell 10A reaches the second voltage value V₃₁ (where t = T₃₁), the first charging control unit 42 controls the power supply circuit 32 such that constant-voltage charging in which the second voltage value is V₃₁ is performed on the first cell 10A. In this manner, the power supply circuit 32 reduces the charging current value. At this time, the inter-terminal voltage value of the second cell 10B is smaller than the second voltage value, and thus, the second cell 10B is charged such that the inter-terminal voltage value thereof increases to the second voltage value. Since the charging current value supplied to the first cell 10A is equal to the charging current value supplied to the second cell 10B, the above-described control can be performed by changing the internal resistance value of the battery pack 38. Specifically, as the constant-voltage charging progresses, the internal resistance of the battery pack 38 which determines the inter-terminal voltage value of the first cell 10A is increased, whereas the internal resistance of the battery pack 38 which determines the inter-terminal voltage value of the second cell 10B is not greatly increased. When detecting that the charging current value is a small current value I₃ₙ (e.g., 100 mA) (where t = T₃₂), the power supply circuit 32 stops the supply of a charging current. In this manner, charging is finished.

In sum, in the charging system of this embodiment, when the first charging control unit 42 detects that the inter-terminal voltage value of the first cell 10A reaches the second voltage value in constant-current charging, constant-voltage charging in which the charging voltage value is the second voltage value is performed on the first cell 10A, whereas the second cell 10B is charged such that the inter-terminal voltage value of the second cell 10B increases to the second voltage value.

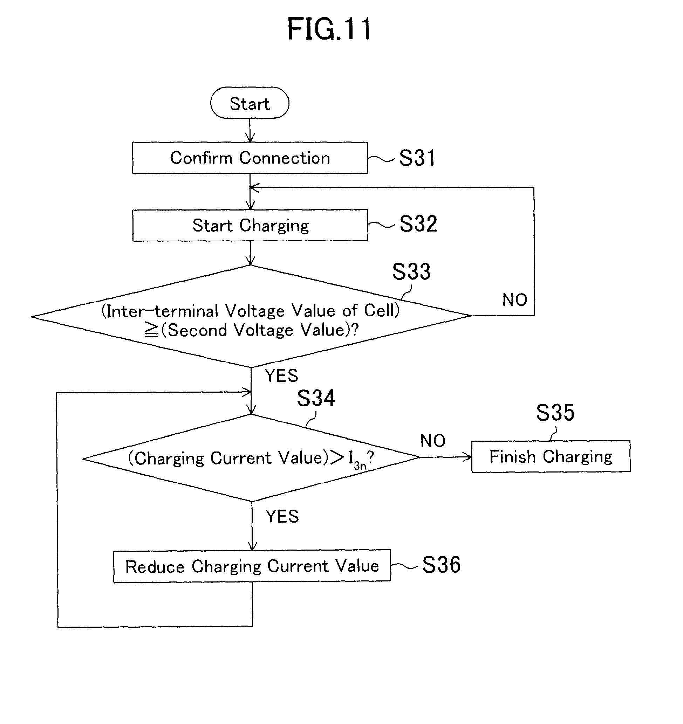

FIG. 11 is a flowchart showing a charging method according to this embodiment.

First, in Step S31, connection is confirmed. Specifically, it is confirmed that the positive electrode terminal 9a, the negative electrode terminal 9b, the temperature terminal 9c, and the potential terminal 9e of the battery pack 38 are respectively connected to the positive electrode terminal 7a, the negative electrode terminal 7b, the temperature terminal 7c, and the potential terminal 7e of the charging device 31. Then, the process proceeds to Step S32.

In Step S32, constant-current charging is performed on the assembled cells 10 (step (d)). Specifically, the power supply circuit 32 in the charging device 31 supplies a constant charging current (where charging current value = I₃₁) to the assembled cells 10 in the battery pack 38. Thereafter, the process proceeds to Step S33.

In Step S33, it is determined whether or not the inter-terminal voltage value of each of the first cell 10A and the second cell 10B reaches the second voltage value. This determination is performed by the first charging control unit 42 and the second charging control unit 43 in the charging device 31. If the first charging control unit 42 determines that the inter-terminal voltage value of the first cell 10A does not reach the second voltage value and the second charging control unit 43 determines that the inter-terminal voltage value of the second cell 10B does not reach the second voltage value (i.e., No), the charging current value is not changed from I₃₁, and the constant-current charging is continued. On the other hand, if the first charging control unit 42 determines that the inter-terminal voltage value of the first cell 10A reaches the second voltage value (i.e., Yes), the process proceeds to Step S34.

In Step S34, it is determined whether or not the charging current value exceeds a small current value I₃ₙ (e.g., 100 mA). If it is determined that the charging current value is smaller than or equal to the small current value I₃ₙ (i.e., No), the process proceeds to Step S35, and charging is finished. On the other hand, if the charging current value exceeds the small current value I₃ₙ (i.e., Yes), the process proceeds to Step S36.

In Step S36, the charging current value is reduced (step (e)). Thus, the first cell 10A is charged such that the inter-terminal voltage value of the first cell 10A does not exceed the second voltage value. On the other hand, the second cell 10B is charged such that the inter-terminal voltage value of the second cell 10B increases to the second voltage value. Thereafter, the process returns to Step S34. In Step S34, this control is repeatedly performed until it is determined that the charging current value reaches the small current value I₃ₙ or less.

As described above, the assembled cells 10 are charged such that the inter-terminal voltage values of the first cell 10A and the second cell 10B do not exceed the second voltage value. If the second voltage value is 4.2 V, the first cell 10A and the second cell 10B can be fully charged. Accordingly, the charging capacity value of the assembled cells 10 after completion of charging can be increased to a charging capacity value defined in the design. In this manner, driving of an electronic device using the assembled cells 10 charged with the charging system or the charging method of this embodiment can ensure a sufficient driving time of the electronic device.

In addition, if the first cell 10A and the second cell 10B can be fully charged, a variation of the charging capacity value between the first cell 10A and the second cell 10B can be reduced. Accordingly, driving of an electronic device using the assembled cells 10 charged with the charging system or the charging method of this embodiment can reduce degradation of the safety of the first cell 10A and the second cell 10B during driving of the electronic device. As a result, the electronic device can be safely used.

Moreover, when the assembled cells 10 can be charged such that the inter-terminal voltage values of the first cell 10A and the second cell 10B do not exceed 4.2 V, application of an overvoltage to each of the first cell 10A and the second cell 10B can be prevented. As a result, degradation of the safety of cells during charging can be reduced.

Furthermore, in this embodiment, the first cell 10A and the second cell 10B can be fully charged without providing the same number of control units as the cells in the battery pack. In addition, each of the first cell 10A and the second cell 10B can be fully charged without providing the same number of determination units as the cells in the battery pack, providing the same number of signal terminals as the cells in the battery pack, and providing the same number of signal terminals as the cells in the charging device 31. As a result, an increase in the sizes of the battery pack 38 and the charging device 31 can be reduced.

In this embodiment, the number of cells forming the assembled cells may be three or more.

### «Other Embodiments»

The present disclosure may have the following configuration.

The cells used in the foregoing embodiments are not limited to lithium ion secondary batteries, and may be nickel-metal hydride batteries or nickel-cadmium batteries.

The charging method of the first embodiment and the charging method of the second embodiment may be combined together, or the charging method of the variation of the first embodiment and the charging method of the second embodiment may be combined together.

### INDUSTRIAL APPLICABILITY

As described above, according to the present disclosure, assembled cells formed by connecting two or more cells in series can be charged without a variation in a charging voltage. Thus, the present disclosure is useful for a charging system including assembled cells formed by connecting two or more cells in series.

## Claims

1. A method for charging assembled cells formed by connecting at least two cells in series, the method comprising the steps of:
(a) performing, on the assembled cells, constant-current charging in which a charging current value is a first current value; and
(b) when an inter-terminal voltage value of one of the cells reaches a first voltage value, reducing the charging current value from the first current value to a second current value, and performing, on the assembled cells, constant-current charging in which the charging current value is the second current value.

2. The charging method of claim 1, further comprising the step of (c) when the inter-terminal voltage value of one of the cells reaches the first voltage value after step (b), reducing the charging current value from the second current value to a third current value, and performing, on the assembled cells, constant-current charging in which the charging current value is the third current value.

3. The charging method of claim 1, wherein the first voltage value is an overvoltage protection voltage value.

4. A method for charging assembled cells formed by connecting at least two cells in series, the method comprising the steps of:
(d) performing constant-current charging on the assembled cells; and
(e) when an inter-terminal voltage value of one of the cells reaches a second voltage value, performing, on the cell whose inter-terminal voltage value reaches the second voltage value, constant-voltage charging in which a charging voltage value is the second voltage value, wherein
in step (e), the charging voltage value of one of the cells whose inter-terminal voltage value does not reach the second voltage value increases to the second voltage value.

5. The method of claim 4, wherein in step (e), the charging current value to be supplied to the cell whose inter-terminal voltage value reaches the second voltage value is equal to the charging current value to be supplied to the cell whose inter-terminal voltage value does not reach the second voltage value.

6. The method of claim 4, wherein the cells are lithium ion secondary batteries, and
the second voltage value is 4.2 V.

7. A charging device configured to charge the assembled cells in a battery pack with the method of claim 1, wherein the charging device comprising:
a power supply circuit configured to supply a charging current to the assembled cells; and
a charging control unit configured to control the power supply circuit such that when the charging control unit receives information that an inter-terminal voltage value of one of the cells reaches the first voltage value from the battery pack, the power supply circuit reduces the charging current value.

8. The charging device of claim 7, further comprising:
a positive electrode terminal and a negative electrode terminal each configured to supply the charging current to the assembled cells; and
a signal terminal connected to the charging control unit, and configured to receive the information from the battery pack.

9. A battery pack configured to be charged by the charging device of claim 7, the battery pack comprising:
the assembled cells;
a voltage monitor configured to monitor an inter-terminal voltage value of each of the cells;
a temperature measurement unit configured to measure a temperature of the assembled cells;
a first negative electrode terminal connected to a negative electrode terminal provided in the charging device;
a first temperature terminal connected to a temperature terminal provided in the charging device, and configured to transmit the temperature of the assembled cells to the charging device; and
a switch connected to the temperature measurement unit in parallel, and connected to the first negative electrode terminal and the first temperature terminal, wherein
when the voltage monitor detects that an inter-terminal voltage value of one of the cells reaches the first voltage value, the voltage monitor switches the switch from an open state to a closed state.

10. A charging device configured to charge the assembled cells with the method of claim 4, the charging device comprising:
a power supply circuit configured to supply a charging current to the assembled cells; and
a charging control unit configured to control the power supply circuit, wherein
the charging control unit monitors an inter-terminal voltage value of each of the cells, and controls the power supply circuit such that when the inter-terminal voltage value of one of the cells reaches the second voltage value, constant-voltage charging in which a charging voltage value is the second voltage value is performed on the cell whose inter-terminal voltage value reaches the second voltage value.
